# EUROPÄISCHE PATENTANMELDUNG

(11) **EP 4 410 460 A1**
(43) Veröffentlichungstag der Anmeldung: **07.08.2024**
(21) Anmeldenummer: 23154963.5
(22) Anmeldetag: 03.02.2023
(51) Int. Cl.: B23B 51/00, B23B 51/02, B28D 1/14, E21B 10/44

(54) **HAMMERBOHRER**

(71) Anmelder: Hilti Aktiengesellschaft, 9494 Schaan (LI)
(72) Erfinder: MEIERHOFER, Markus, 9472 Grabs (CH); BOHN, Klaus-Peter, 9494 Schaan (LI); FOSER, Roland, 9491 Ruggell (LI)
(74) Vertreter: Hilti Aktiengesellschaft Corporate Intellectual Property

(57) **Zusammenfassung**

Die Erfindung betrifft einen **Hammerbohrer (10),** umfassend einen Schaftabschnitt (12), einenends des Schaftabschnitts (12) einen Bohrkopf (14) und anderenends einen Einsteckabschnitt (16), wobei entlang des Schaftabschnitts (12) eine Förderwendel (18) ausgebildet ist, wobei am Bohrkopf (14) wenigstens eine Schlagspitze (20) oder eine Schlagkante (22) ausgebildet ist. Sie ist dadurch gekennzeichnet, dass am Bohrkopf (14) eine Wendel (24) ausgebildet ist, die schräg zu einer Längsachse (L) des Hammerbohrers (10) in die Förderwendel (18) mündet. Der Hammerbohrer (10) kann eine besonders hohe Abbauleistung aufweisen.

## Beschreibung

Die Erfindung geht aus von einem Hammerbohrer, umfassend einen Schaftabschnitt, einenends des Schaftabschnitts einen Bohrkopf und anderenends einen Einsteckabschnitt, wobei entlang des Schaftabschnitts eine Förderwendel ausgebildet ist, wobei am Bohrkopf wenigstens eine Schlagspitze oder eine Schlagkante ausgebildet ist.

Derartige Hammerbohrer kommen insbesondere zum Bohren von Gestein zum Einsatz.

Ein Hammerbohrer sollte eine möglichst hohe Abbauleistung zeigen, um ein zügiges Arbeiten, insbesondere auch in harten Gesteinen wie Beton, beispielsweise in Form von Stahlbeton, oder Granit, zu ermöglichen.

Aufgabe der vorliegenden Erfindung ist es daher, einen Hammerbohrer der eingangs genannten Art mit einer besonders hohen Abbauleistung zur Verfügung zu stellen.

Gelöst wird die Aufgabe durch einen **Hammerbohrer,** umfassend einen Schaftabschnitt, einenends des Schaftabschnitts einen Bohrkopf und anderenends einen Einsteckabschnitt, wobei entlang des Schaftabschnitts eine Förderwendel ausgebildet ist, wobei am Bohrkopf wenigstens eine Schlagspitze oder eine Schlagkante ausgebildet ist, wobei am Bohrkopf eine Wendel ausgebildet ist, die schräg zu einer Längsachse des Hammerbohrers in die Förderwendel mündet.

Dem liegt unter anderem der Gedanke zugrunde, dass beim Abbau von Gestein entstehendes Bohrmehl vom Bohrkopf weg zu fördern ist. Durch die am Bohrkopf ausgebildete Wendel kann das Bohrmehl bereits im Bereich des Bohrkopfes aktiv abtransportiert werden. Gegenüber einer sonst im Bereich des Bohrkopfs üblichen reinen Druckförderung kann die Bohrmehl-Transportleistung gesteigert werden. Das Bohrmehl kann somit den Abbau an der Schlagspitze oder der Schlagkante weniger behindern. Dadurch kann sich die Abbauleistung insgesamt verbessern.

Die Wendel kann dazu beispielsweise mit einem Winkel von wenigstens einem Grad, beispielsweise mit einem Winkel zwischen 5 und 75 Grad, relativ zur Längsachse in die Förderwendel münden.

Wendel und Förderwendel können insbesondere die gleiche Steigung aufweisen.

Die Transportleistung kann insgesamt gesteigert werden, wenn die Förderwendel mehrgängig ist. Beispielsweise kann sie wenigstens zwei Gänge aufweisen. Die Wendel am Bohrkopf kann ebenfalls mehrgängig sein. Insbesondere kann sie eine der Förderwendel entsprechende Anzahl von Gängen aufweisen. Die Gänge können an jeweils einer Schlagkante münden. Dementsprechend kann der Bohrkopf einer der Gangzahl entsprechende Schlagkanten aufweisen.

Der Bohrkopf kann wenigstens zwei, insbesondere vier, fünf oder sechs, Schlagkanten aufweisen.

Eine höhere Anzahl von Schlagkanten kann dazu beitragen, dass der Hammerbohrer beim Auftreffen auf Stahl, beispielsweise beim Bohren in Stahlbeton, sich nicht oder zumindest in nur seltenen Fällen verklemmt.

Um die Bruchfestigkeit des Bohrkopfs zu verbessern, kann sich der Bohrkopf verjüngen. Beispielsweise kann sich der Bohrkopf zur Schlagspitze bzw. Schlagkante hin verjüngen. Dazu kann beispielsweise ein Durchmesser der Wendel geringer sein als ein Durchmesser der Förderwendel.

Der Fluss des Bohrmehls entlang der Förderwendel und / oder der Wendel kann ferner verbessert werden, wenn zumindest eine Steigung der Wendel und / oder eine Steigung der Förderwendel wenigstens abschnittsweise stetig variiert. Insbesondere können lokale Stauungen von Bohrmehl entlang der Förderwendel und / oder der Wendel vermieden werden.

Der Bohrkopf kann an den Schaftabschnitt gefügt, beispielsweise angelötet oder angeschweißt, sein. Eine Fügezone zwischen dem Bohrkopf und dem Schaftabschnitt kann ausgebildet sein, in der sich der Bohrkopf und der Schaftabschnitt entlang einer Kontaktfläche kontaktieren. Um die Größe der Kontaktfläche je nach erforderlicher Festigkeit der Fügung und / oder weiterer Kriterien anpassen zu können, kann zumindest in einem Abschnitt der Wendel ihr Wendelrücken breiter oder schmaler sein als ein Wendelrücken der Förderwendel.

Ein Durchmesser des Bohrkopfes kann größer sein als ein größter Durchmesser der Förderwendel. Der Bohrkopf kann somit über die Förderwendel hinausragen. Somit kann zwischen der Wandung eines gebohrten Bohrlochs, in dem sich der Hammerbohrer befindet, und dem Schaftabschnitt des Hammerbohrers ein Freiraum bestehen. Beispielsweise kann sich der Bohrkopf von seiner Schlagspitze oder der Schlagkante zur Förderwendel hin verjüngen. Reibung zwischen dem Schaftabschnitt, insbesondere der Förderwendel, und der Wandung wird reduziert, sodass Reibungsverluste durch die Rotation des Hammerbohrers während des Hammerbohrens minimiert werden können.

Der Bohrkopf kann ein Wolfram-haltiges Material aufweisen, insbesondere ein Wolframcarbid und / oder ein Wolframborid. Somit kann der Bohrkopf eine besonders hohe Härte und / oder eine besonders gute Bruchfestigkeit aufweisen.

Der Hammerbohrer kann dadurch beispielsweise eingerichtet sein, hohe Schlagimpulse entlang seiner Längsachse auf einen zu bearbeitenden Untergrund zu übertragen. Je nach Werkzeugmaschine, mit der der Hammerbohrer angetrieben wird, können Einzelschlagenergien von 1 J oder höher, beispielsweise 5 J, wirken. Geeignete Werkzeugmaschinen, insbesondere Bohrhammermaschinen, weisen zur Erzeugung der Schlagimpulse häufig einen elektropneumatischen Antrieb auf. Bei derart hohen Einzelschlagenergien und besonders auch bei hohen Schlagfrequenzen, kann Bohrmehl mit einem hohen Durchsatz produziert werden. Je höher der Durchsatz, desto vorteilhafter ist eine hohe Transportleistung, wie sie der vorangehend beschriebene Hammerbohrer bieten kann.

Denkbar ist, dass der Hammerbohrer eingerichtet ist für Bauarbeiten im Hochbau und / oder im Tiefbau.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen

Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: eine Seitenansicht von Teilen eines Hammerbohrers;
- Fig. 2: eine Seitenansicht eines Bohrkopfs des Hammerbohrers;
- Fig. 3: eine Draufsicht auf den Bohrkopf;
- Fig. 4: eine Seitenansicht eines Teils des Hammerbohrers;
- Fig. 5: ein Diagramm mit Vergleichsdaten zu anderen Gesteinsbohrern.

In der nachfolgenden Beschreibung der Figuren werden zur Erleichterung des Verständnisses der Erfindung für gleiche oder sich funktional entsprechende Elemente jeweils die gleichen Bezugszeichen verwendet.

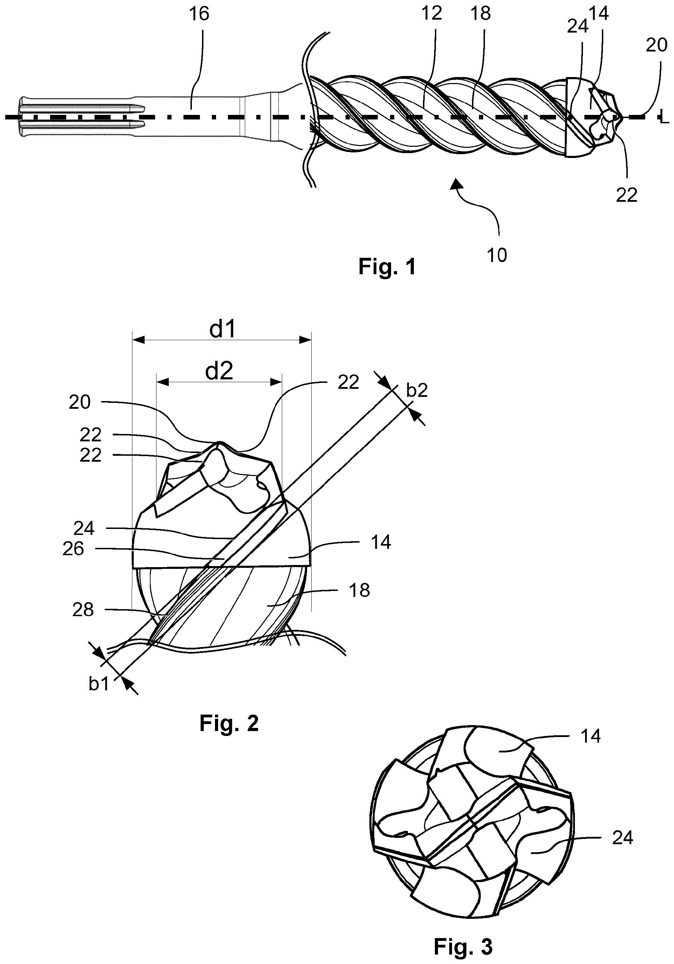

**Fig. 1** zeigt in einer Seitenansicht einen Hammerbohrer **10,** umfassend einen Schaftabschnitt **12,** einenends des Schaftabschnitts 12 einen Bohrkopf **14** und anderenends einen Einsteckabschnitt **16.**

Entlang des Schaftabschnitts 12 ist eine Förderwendel **18** ausgebildet.

Aus Darstellungsgründen ist in Fig. 1 der Schaftabschnitt 12 mit seiner Förderwendel 18 verkürzt dargestellt.

Der Bohrkopf 14 ist aus gesintertem Wolframkarbid ausgebildet. Denkbar ist, dass das gesinterte Wolframkarbid einen Kobalt-freien Binder aufweist.

Am Bohrkopf 14 sind eine Schlagspitze **20** sowie mehrere Schlagkanten **22** ausgebildet, von denen in Fig. 1 jeweils beispielhaft eine mit einem Bezugszeichen versehen ist.

Die Förderwendel 18 weist zwei Gänge auf. Bei alternativen Ausführungsformen kann die Förderwendel 18 auch nur einen oder mehr als zwei Gänge aufweisen. Bei besonders bevorzugten Ausführungsformen kann die Anzahl der Gänge der Förderwendel 18 der Anzahl Schlagkanten 22 entsprechen.

Ferner ist am Bohrkopf 14 eine Wendel **24** ausgebildet. Die Wendel 24 mündet schräg zu einer Längsachse L des Hammerbohrers 10 in die Förderwendel 18.

**Fig. 2** zeigt in einer Seitenansicht eine Detailansicht auf den Bohrkopf 14 sowie auf ein Teilstück der Förderwendel 18.

Der Bohrkopf 14 verjüngt sich zu seinen Schlagkanten 22 und seiner Schlagspitze 20 hin. Dementsprechend verjüngt sich auch die Wendel 24 von einem Durchmesser **d1** in einem Sockelbereich des Bohrkopfs 14 bis zu einem Durchmesser **d2** im Bereich der Schlagkanten 22.

Fig. 2 ist ferner zu entnehmen, dass eine Breite **b1** eines Wendelrückens **26** der Wendel 24 breiter ist als eine Breite **b2** eines Förderwendelrückens **28** der Förderwendel 18.

**Fig. 3** zeigt eine Draufsicht auf den Bohrkopf 14. Durch die schräg zur Längsachse L (siehe Fig. 1) verlaufende Wendel 24 ergibt sich eine propellerförmige Geometrie des Bohrkopfs 14.

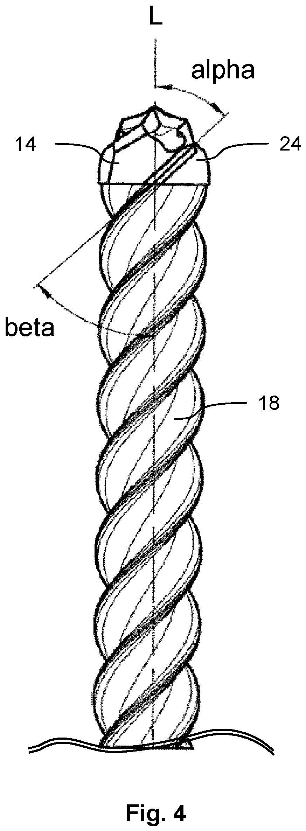

Anhand von **Fig. 4****,** die den Bohrkopf 14 mit seiner Wendel 24 und einen Teil der Förderwendel 18 zeigt, ist zu erkennen, dass die Wendel 24 die gleiche Steigung aufweist wie die Förderwendel 18. Insbesondere bildet die Wendel 24 einen Winkel **alpha** von 45° zur Längsachse L und die Förderwendel 18 bildet einen Winkel **beta** von 45° zur Längsachse L.

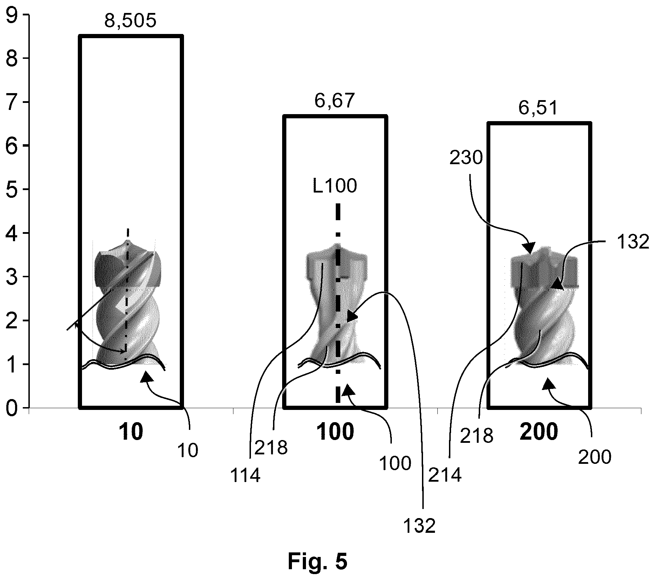

**Fig. 5** zeigt in einem Diagramm Ergebnisse eines Vergleichstests der Abbauleistung des Hammerbohrers 10 zu den Abbauleistungen zweier anderer Gesteinsbohrer **100, 200.**

Die Gesteinsbohrer 100, 200 unterscheiden sich unter anderem von dem Hammerbohrer 10 dadurch, dass deren Bohrköpfe **114, 214** keine schräg zu einer Längsachse in eine Förderwendel **118, 218** mündende Wendel aufweisen.

So verläuft bei dem Gesteinsbohrer 100 seine Förderwendel 118 zumindest stückweise parallel zu seiner Längsachse **L100.** Sein Bohrkopf 114 weist keine Wendel auf.

Somit ergeben sich entlang der Förderwendel 118 Knickstellen **132,** an denen während des Bohrens mit dem Gesteinsbohrer 100 vorbeigleitendes Bohrmehl einen abrupten Richtungswechsel vollziehen muss.

Auch der Bohrkopf 214 des Gesteinsbohrers 200 weist keine Wendel auf. Zwischen Bohrmehleintrittsbereichen **230** am Bohrkopf 214 und einer Förderwendel 218 des Gesteinsbohrers 200 ergeben sich ebenfalls Knickstellen **232,** an denen während des Bohrens mit dem Gesteinsbohrer 200 vorbeigleitendes Bohrmehl ebenfalls einen abrupten Richtungswechsel vollziehen muss.

Abbauleistungen wurden in Form von Bohrgeschwindigkeiten in mm / s beim Bohren in Beton der Klasse C50 / 60 GK8 bei einer Anpresskraft von 200 N mit einer Bohrhammermaschine mit einer Einzelschlagenergie von ca. 12 J gemessen.

Der Hammerbohrer 10 wies mit ca. 8,5 mm / s gegenüber ca. 6,7 mm / s bei dem Gesteinsbohrer 100 und ca. 6,5 mm / s beim Gesteinsbohrer 200 eine um mehr als 25 % gesteigerte Abbauleistung auf.

### Bezugszeichenliste

- 10: Hammerbohrer
- 12: Schaftabschnitt
- 14: Bohrkopf
- 16: Einsteckabschnitt
- 18: Förderwendel
- 20: Schlagspitze
- 22: Schlagkante
- 24: Wendel
- 26: Wendelrücken
- 28: Förderwendelrücken
- 100: Gesteinsbohrer
- 114: Bohrkopf
- 118: Förderwendel
- 132: Knickstelle
- 200: Gesteinsbohrer
- 218: Förderwendel
- 230: Bohrmehleintrittsbereich
- 232: Knickstelle
- alpha: Winkel
- beta: Winkel
- L: Längsachse
- L100: Längsachse
- b1: Breite
- b2: Breite
- d1: Durchmesser
- d2: Durchmesser

## Patentansprüche

1. **Hammerbohrer (10),** umfassend einen Schaftabschnitt (12), einenends des Schaftabschnitts (12) einen Bohrkopf (14) und anderenends einen Einsteckabschnitt (16), wobei entlang des Schaftabschnitts (12) eine Förderwendel (18) ausgebildet ist, wobei am Bohrkopf (14) wenigstens eine Schlagspitze (20) oder eine Schlagkante (22) ausgebildet ist,
**dadurch gekennzeichnet,**
**dass** am Bohrkopf (14) eine Wendel (24) ausgebildet ist, die schräg zu einer Längsachse (L) des Hammerbohrers (10) in die Förderwendel (18) mündet.

2. Hammerbohrer (10) nach dem vorhergehenden Anspruch, **dadurch gekennzeichnet, dass** die Förderwendel (18) mehrgängig ist.

3. Hammerbohrer (10) nach einem der vorhergehenden Ansprüche, **dadurch gekennzeichnet, dass** sich der Bohrkopf (14) verjüngt.

4. Hammerbohrer (10) nach einem der vorhergehenden Ansprüche, **dadurch gekennzeichnet, dass** zumindest eine Steigung der Wendel (24) und / oder eine Steigung der Förderwendel (18) wenigstens abschnittsweise stetig variiert.

5. Hammerbohrer (10) nach einem der vorhergehenden Ansprüche, **dadurch gekennzeichnet, dass** zumindest in einem Abschnitt der Wendel (24) ihr Wendelrücken (26) breiter oder schmaler ist als ein Förderwendelrücken (28) der Förderwendel (18).

6. Hammerbohrer (10) nach einem der vorhergehenden Ansprüche, **dadurch gekennzeichnet, dass** ein Durchmesser (d1, d2) des Bohrkopfes (14) größer ist als ein Durchmesser (d1, d2) der Förderwendel (18).

7. Hammerbohrer (10) nach einem der vorhergehenden Ansprüche, **dadurch gekennzeichnet, dass** der Bohrkopf (14) ein Wolfram-haltiges Material aufweist, insbesondere ein Wolframcarbid und / oder ein Wolframborid.
